# EUROPÄISCHE PATENTANMELDUNG

(11) **EP 1 256 633 A2**
(43) Veröffentlichungstag der Anmeldung: **13.11.2002**
(21) Anmeldenummer: 02450116.5
(22) Anmeldetag: 10.05.2002
(51) Int. Cl.: C21B 3/06, C21B 3/08, C04B 5/00, B22F 9/08

(54) **Verfahren zum Zerstäuben von schmelzflüssigem Material, insbes. flüssigen Schlacken, sowie Vorrichtung zur Durchführung dieses Verfahrens**

(30) Priorität: 10.05.2001 AT 7512001; 05.06.2001 AT 8702001
(71) Anmelder: Tribovent Verfahrensentwicklung GmbH, 6700 Lorüns (AT)
(72) Erfinder: Edlinger, Alfred, Dipl. Ing., 6780 Bartholomäberg (AT)
(74) Vertreter: Haffner, Thomas M., Dr.

(57) **Zusammenfassung**

Bei einem Verfahren zum Zerstäuben von schmelzflüssigem Material, wie z.B. flüssigen Schlacken, Glasschmelzen und/oder Metallschmelzen, bei welchem die flüssige Schlacke als hohlzylindrischer Strahl in einen Kühlraum ausgestoßen wird, wird in Richtung der Achse des hohlzylindrischen Schlackenstrahles heißes Druckwasser ausgestoßen, wobei der Verdampfungspunkt des Druckwasserstrahles nahe der oder unterhalb der Unterkante der Auslauföffnung des Schlackentundish liegt.

Die Vorrichtung zur Durchführung des Verfahrens weist einen Schlackentundish (1) auf, an dessen Auslauföffnung (34) ein Kühlraum anschließt, wobei fluchtend mit der Achse der Auslauföffnung (34) eine Druckwasserdüse (4) angeordnet ist, deren Düsenmündung (5) zur Auslauföffnung (4) des Schlackentundish (1) gerichtet angeordnet ist. An die Druckwasserdüse (4) ist eine Speisewasserpumpe (7), insbesondere Kolbenpumpe, angeschlossen.

## Beschreibung

Die Erfindung bezieht sich auf ein Verfahren zum Zerstäuben von schmelzflüssigem Material, wie z.B. flüssigen Schlacken, Glasschmelzen und/oder Metallschmelzen, bei welchem die flüssige Schlacke als hohlzylindrischer Strahl in einen Kühlraum ausgetragen wird, sowie auf eine Vorrichtung zur Durchführung dieses Verfahrens.

Schmelzflüssige Hochofenschlacke fällt üblicherweise bei Temperaturen zwischen 1350 und 1600° C an. Neben der Trockengranulation wird gegenwärtig zumeist eine Kaltwassergranulation zur Erzielung von erstarrten Schlackenpartikeln angewandt, bei welcher die flüssige Hochofenschlacke mit 6 bis 12 m³ Wasser pro Tonne Schlacke granuliert wird. Das eingesetzte Wasser erwärmt sich dabei auf Temperaturen von etwa 85° C und wird in Kühltürmen wiederum auf Temperaturen von unter 40° C abgekühlt, wobei als Kühlenthalpie somit nur die fühlbare Wärme des Wassers zwischen etwa 40 und etwa 85° C zur Verfügung steht. In der Wasserphase kommt es zu einer Aufsalzung und teilweise zu einer Verdunstung des Wassers. Es muss daher in regelmäßigen Abständen die wässrige Phase abgeschlämmt werden und Zusatzwasser hinzugefügt werden. Bedingt durch die Schlackenchemie weist das Abwasser relativ hohe pH-Werte auf, wobei pH-Werte bis zu etwa 12 beobachtet werden. Derartiges Kühlwasser kann daher in der Folge nicht ohne Vorbehandlung einem Vorfluter aufgegeben werden, und es muss daher zwingend neutralisiert und meist auch noch zusätzlich gekühlt werden. Die Schwebstoffe des Abwassers müssen ebenfalls sedimentiert werden.

Sowohl die Schwebstoffe als auch der hohe Salzgehalt des Abwassers sind keinesfalls umweltverträglich, sodass die Entsorgung mit weiteren Kosten verbunden ist. Das aus einer derartigen Nassgranulation ausgetragene Schlackengranulat weist eine Restfeuchte von 8 bis 24 Gew.% auf und muss daher unter weiterem Kostenaufwand mechanisch vorentwässert und thermisch getrocknet werden. Das Granulat fällt mit Korngrößen zwischen 10 und 1500 µ als relativ dichtes Korn an und weist nur geringe Porosität auf, sodass ein nachfolgender weiterer Zerkleinerungsprozess, und insbesondere ein Mahlprozess, relativ energieaufwendig ist. Je gröber das Korn, desto geringer ist der Verglasungsanteil, und es liegt insbesondere der Grobfraktionsanteil mit Korngrößen von über 600 µ zumindest teilweise entglast vor, wohingegen der Feinanteil aufgrund der relativ langen Verweilzeit im Wasser bereits teilweise hydratisiert vorliegt und in der Folge daher zementtechnologisch inaktiv wird.

Bei der Granulation fallen hohe Mengen an Schwefelwasserstoff an, wobei die H₂S-Emission aus einer Schlacke-Wasser-Reaktion stammt und über aufwendige Gaswäscher eliminiert werden muss. Bei dieser Schlacke-Wasser-Reaktion wird Kalziumsulfid mit Wasser zu Kalziumoxid und Schwefelwasserstoff umgesetzt, welches mit dem verdunstenden Wasser in der Gasphase in entsprechender Verdünnung mit Luft vorliegt.

Vorrichtungen zum Zerstäuben von Schmelzen, insbesondere Schlackenschmelzen mit einem Schlackentundish mit einer Auslauföffnung, in welcher eine Lanze für einen Treibstrahl mündet und an welcher eine Kühlkammer angeschlossen ist, sind in unterschiedlichen Ausbildungen bereits vorgeschlagen worden, wobei mit derartigen Einrichtungen unterschiedliche Schlacken und Metallschmelzen eingesetzt werden können und besonders kleine Tropfengrößen realisiert werden können. Gleichzeitig wird bei einer derartigen Zerstäubung mittels eines Treibstrahles eine rasche Abkühlung, damit ein Verglasen der Schlacken bewirkt, wodurch ein nachfolgendes Mahlen von feinstkörnig erstarrten und verglasten Partikeln für den Einsatz als hydraulische Bindemittel sogar entbehrlich werden kann. Die Treibfluidlanzen wurden in derartigen Einrichtungen in der Regel mit Dampf oder Treibgas betrieben, wobei bei entsprechender Geometrie der Auslassöffnung der Lanze und entsprechendem Druck die Strömungsbedingungen so eingestellt werden können, dass das Treibfluid mit Schallgeschwindigkeit aus der Treiblanzendüse austritt und in der Folge ein Bereich einer als Lavaldüse ausgebildeten Auslassöffnung rasch expandiert, wobei in diesem Bereich sogar Überschallgeschwindigkeiten erreicht werden. Mit derartigen, in weiten Grenzen veränderlichen Strömungsbedingungen können auch Druckstöße in einem unterexpandierten Freistrahl ausgebildet werden. In der Regel wird bei derartigen Zerstäubervorrichtungen der Treibstrahl im wesentlichen in axialer Richtung eingestoßen, wobei die Zerkleinerungskräfte prinzipiell als Scherkräfte zur Wirkung gelangen, wobei ein in wesentlichen axial gerichteter Treibstrahl mit entsprechender Viskosität nach seiner Expansion im Inneren des diesen Treibstrahl konzentrisch umgebenden Mantels der flüssigen Schlacke eine Beschleunigung und damit entsprechende Scherkräfte induziert. Da die Scherkräfte im wesentlichen auf Grund der axialen Beschleunigung zur Wirkung kommen, ist bei diesen Ausbildungen der Treibmediumverbrauch relativ hoch.

Die Erfindung zielt nun darauf ab, ein Verfahren der eingangs genannten Art zu schaffen, mit welchem es gelingt, die Strömungsbedingungen im Auslauf des Schlackentundish noch besser zu kontrollieren und bei geringem konstruktiven Aufwand ein hohes Maß an Zerkleinerungsleistung zu gewährleisten. Weiters zielt die Erfindung darauf ab, das flüssige Treibstrahlmedium besser thermisch zu nutzen und gleichzeitig sicherzustellen, das bei einer an die Kühlung angeschlossenen Kondensation bei der Schlacke-Wasserreaktion entstehende H₂S in der Gasphase zu halten und hier in konzentrierter Form wirtschaftlich sinnvoll aufarbeiten zu können. Zur Lösung dieser Aufgabe besteht das erfindungsgemäße Verfahren im wesentlichen darin, dass in Richtung der Achse des hohlzylindrischen Schlackenstrahles heißes Druckwasser ausgestoßen wird, wobei der Verdampfungspunkt des Druckwasserstrahles nahe der oder unterhalb der Unterkante der Auslauföffnung des Schlackentundish liegt. Dadurch, dass heißes Druckwasser, insbesondere mit einer Temperatur von 5-10°C unter dem Siedepunkt, beispielsweise mit einem Druck von etwa 42 bar und einer Temperatur von etwa 240°C eingesetzt wird, expandiert dieses Treibgasmedium explosionsartig am Verdampfungspunkt auf das ca. 3000fache Volumen, wobei bei der Entspannung in den Kühlbereich Drücke von etwa 0 bis 3 bar über dem atmosphärischen Druck gemessen werden. Insgesamt ergeben sich dadurch extrem hohe Scherkräfte bei der Ausbildung einer Kugelwelle, wobei der Verdampfungspunkt des Druckwasserstrahles nahe der oder unterhalb der Unterkante der Auslauföffnung des Schlackentundish liegt, und somit dem Düsenaustrittspunkt benachbart ist. Diese extreme Expansion des heißen Druckwassers führt nicht nur zu extrem hohen Scherkräften, sondern auch zu Strömungsgeschwindigkeiten in der Größenordnung von mehrfacher Schallgeschwindigkeit, wobei in der Verdampfungs- und Expansionswolke eine rasche Abkühlung mit dem Zentrum im Verdampfungspunkt und damit an der Düsenspitze erzielt wird. Insgesamt gelingt es auf diese Weise zusätzlich ein Zuwachsen der Austrittsöffnung des Tundishes durch Kühlvorgänge sicher zu verhindern und die maximale Kühlleistung unmittelbar in den mit dem Druckwasser ausgestoßenen Schlackenstrahl zu übertragen, wodurch eine besonders rasche und damit glasartige und auf Grund der extrem hohen Scherkräfte auch überaus feinteilige Zerstäubung erfolgt. Die Druckenergie wird in einer dem Heißwassererzeuger vorgeschalteten Wasserdruckerhöhungsanlage und beispielsweise einer Speisewasserpumpe aufgebracht, wobei das heiße 2-Phasen-Gemisch aus gebildetem Dampf und feinkörnigen Partikeln durch Staubabscheidung und anschließende Wasserdampfkondensation wiederum aufbereitet werden kann und gegebenenfalls gebildeter Schwefelwasserstoff aus der Gasphase abgetrennt werden kann. Prinzipiell kann heißes Druckwasser bevorzugt mit zwischen 10 bar bis zu 175°C und bis zu 224 bar bei bis zu 370°C eingesetzt. werden, wobei das Heißwasser an der Düse knapp unter der jeweiligen Verdampfungstemperatur vorliegen soll. Insgesamt gelingt es durch die Verwendung von heißem Druckwasser, den spezifischen Treibmittelverbrauch relativ gering zu halten, und das erfindungsgemäße Verfahren wird bevorzugt so durchgeführt, dass Druckwasser in Mengen von 0,1 bis 0,5 t je t Schlacke eingesetzt wird. Das Druckwasser kann prinzipiell in Ausflussrichtung des Schlackenstrahles ausgestoßen werden, wobei bevorzugt auch so vorgegangen werden kann, dass das Druckwasser entgegen der Ausflussrichtung des Schlackenstrahles ausgestoßen wird.

Zusätzlich zu dem Umstand, dass durch die explosionsartige Verdampfung und das Anwachsen des Volumens auf das etwa 3000fache mehrfache Schallgeschwindigkeit erzielt wird, kann das erfindungsgemäße Verfahren noch dadurch effizienter gestaltet werden, dass das heiße Druckwasser mit hochfrequenten Schwingungen, insbesondere Ultraschallschwingungen, beaufschlagt wird. Druckwasser erlaubt eine besonders günstige Übertragung von Ultraschallwellen mit hoher Leistungsdichte, und mit derartigen Maßnahmen kann die Kavitationswelle unmittelbar bei der Kollision mit dem flüssigen Schlackenmantel zur Zerkleinerung genutzt werden.

Insgesamt hat sich herausgestellt, dass die explosionsartige Verdampfung des Druckwassers im Verdampfungspunkt relativ unkontrolliert abläuft, wobei auch beobachtet wurde, dass nur ein Teil des eingeschlossenen Wassers tatsächlich verdampft. Um die mehr oder weniger unkontrolliert erfolgende explosionsartige Verdampfung des Druckwassers besser regeln zu können und somit eine bessere Kontrolle über den Zerstäubungsvorgang zu erhalten wird erfindungsgemäß derart vorgegangen, dass den Druckwasserstrahl umgebend Dampf ausgestoßen wird, wobei der Dampf als Sattdampf oder überhitzter Dampf eingesetzt werden kann. Dampf wird somit als Mantel des Druckwasserstrahles ausgestoßen und verhindert eine allzu rasche Unterkühlung der Schmelze durch einen teilweisen Entzug der Verdampfungsenthalpie. Über die Dampftemperatur und die Menge des eingebrachten Dampfes ergeben sich somit eine Vielzahl von Möglichkeiten den Zerstäubungsvorgang zu regeln, wobei insbesondere Vorteile und Optimierungsmöglichkeiten in Bezug auf eine breitere Kornverteilung und in Bezug auf die Wirtschaftlichkeit des Verfahrens zum Tragen kommen. Außerdem lässt sich dadurch eine autotherme Mikrogranulation der Schmelze verwirklichen. Durch entsprechende Regelung der Dampftemperatur bzw. Dampfmenge können auch gezielt Fasern oder Wolle anstatt des Mikrogranulat erhalten werden.

Die erfindungsgemäße Vorrichtung zur Durchführung dieses Verfahrens mit einem Schlackentundish, an dessen Auslauföffnung ein Kühlraum anschließt, ist im wesentlichen dadurch gekennzeichnet, dass fluchtend mit der Achse der Auslauföffnung eine Druckwasserdüse angeordnet ist, deren Düsenmündung zur Auslauföffnung des Schlackentundish gerichtet angeordnet ist, wobei an die Druckwasserdüse eine Speisewasserpumpe, insbesondere Kolbenpumpe, angeschlossen ist. Da im vorliegenden Fall lediglich Heißwasser unter Druck eingesetzt wird, sind zu diesem Zweck einfache Speisewasserpumpen, insbesondere Kolbenpumpen, geeignet. Dadurch, dass die Düsenmündung der Druckwasserdüse zur Auslauföffnung des Schlackentundish gerichtet angeordnet ist, wird die Möglichkeit geschaffen, die Heißwasserzuführung aus der thermisch hochbelasteten Zone fernzuhalten, wobei insbesondere vermieden wird, dass die Heißwasserlanze in das Schlackenbad eintauchend angeordnet ist.

Wie bereits erwähnt soll der Verdampfungspunkt des Druckwasserstrahles nahe der oder unterhalb der Unterkante der Auslauföffnung des hohlzylindrischen Schlackenstrahles aus dem Schlackentundish liegen, zu welchem Zweck die Vorrichtung bevorzugt derart ausgebildet ist, dass der Abstand der Düsenmündung der Druckwasserdüse von der Unterkante des Tundishauslaufes dem 0,5 bis 5-fachen der lichten Weite des hohlzylindrischen Schlackenstrahles entspricht. Dadurch wird sichergestellt, dass der Verdampfungspunkt der Düsenmündung benachbart liegt, sodass die gewünschten extrem hohen Scherkräfte des kugelwellenartig expandierenden Dampfes auf den Schlackenstrahl zur Wirkung gelangen. Zur Einstellung der jeweils erforderlichen Zerstäubungsparameter ist mit Vorteil die Druckwasserdüse in Höhenrichtung verstellbar angeordnet.

Um das heiße Druckwasser mit hochfrequenten Schwingungen, insbesondere Ultraschallschwingungen, zu beaufschlagen, ist bevorzugt an die Speisewasserpumpe ein Schwingquarz angeschlossen.

Um zusätzlich zum Druckwasserstrahl auch Dampf auszustoßen, welcher den Druckwasserstrahl als Mantel umgeben soll, ist die Vorrichtung bevorzugt derart weitergebildet, dass die Druckwasserdüse umgebend eine Dampflanze mit ringförmigem Querschnitt angeordnet ist. Die Dampflanze kann hierbei als gesonderter Bauteil ausgebildet sein und bevorzugt unabhängig von der jeweiligen Stellung der Heißwasserdüse in Höhenrichtung verstellbar angeordnet sein. Die Dampflanze kann gesondert von einer Isolation umgeben sein, wobei die Dampflanze von einem Wehrrohr umgeben wird, welches in die Schlacke eintaucht. Alternativ kann die Vorrichtung jedoch auch derart ausgebildet sein, dass unmittelbar die Dampflanze als Wehrrohr in die Schmelze eintauchend ausgebildet ist.

Insgesamt sind somit die Druckwasserdüse und die Dampflanze koaxial zueinander angeordnet, wobei in bevorzugter Weise der Mündungsbereich der Dampflanze mit der Druckwasserdüse eine Lavaldüse, vorzugsweise eine unterexpandierte Lavaldüse, ausbildet.

Um insgesamt die Bauhöhe des Kühlraumes zu verringern, kann mit Vorteil die Ausbildung so getroffen sein, dass an den Schlackenauslauf in axialer Richtung anschließend im Kühlraum ein Leitapparat angeordnet ist.

Mit besonderem Vorteil ist die Ausbildung hierbei so getroffen, dass der Leitapparat als Rotor ausgebildet ist und an seinem Umfang in einen als Strahlmühle ausgebildeten Kanal mündet. In besonders einfacher Weise kann die Konstruktion hierbei so gewählt sein, dass der Rotor über Sperrdampf-Labyrinthdichtungen an der in einem stationären Teil ausgebildeten Strahlmühle und am Tundish anschließt. Mit einer derartigen Einrichtung gelingt es, durch die Zentrifugalkraft die Ausbildung eines unerwünschten Überdruckes und damit eines Rückschlages in den Tundish zuverlässig zu vermeiden, wobei gleichzeitig eine besonders feine Mikronisierung bzw. Zerkleinerung ermöglicht wird.

Die Erfindung wird nachfolgend an Hand eines in einer Zeichnung schematisch dargestellten Ausführungsbeispieles näher erläutert.

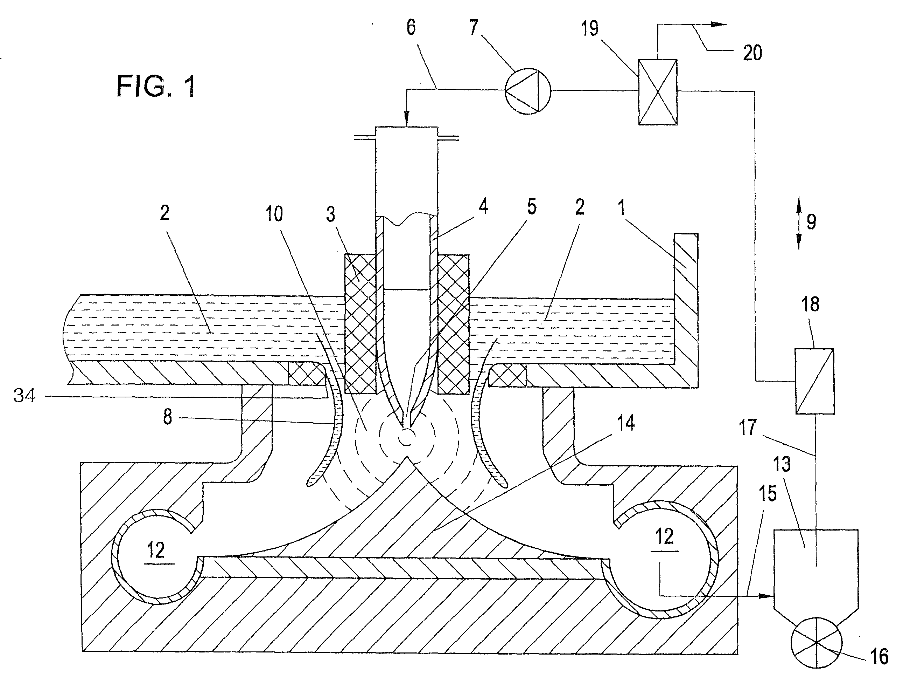

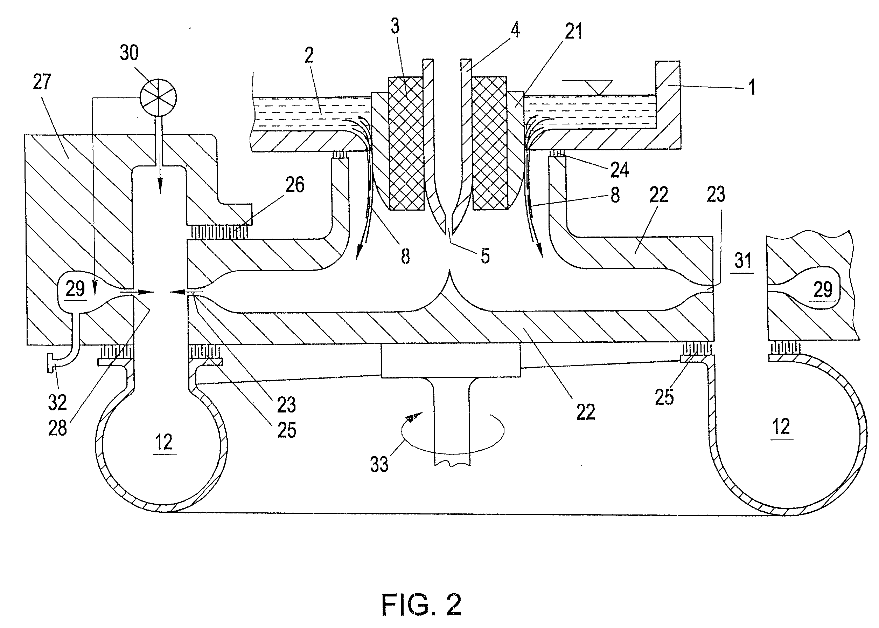

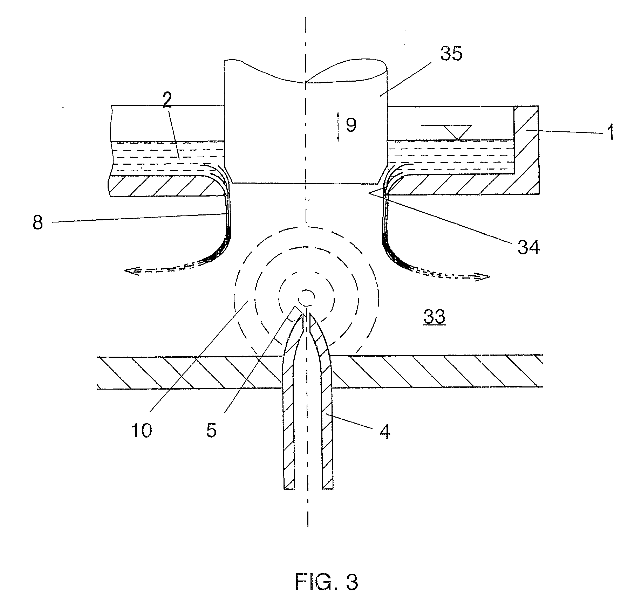

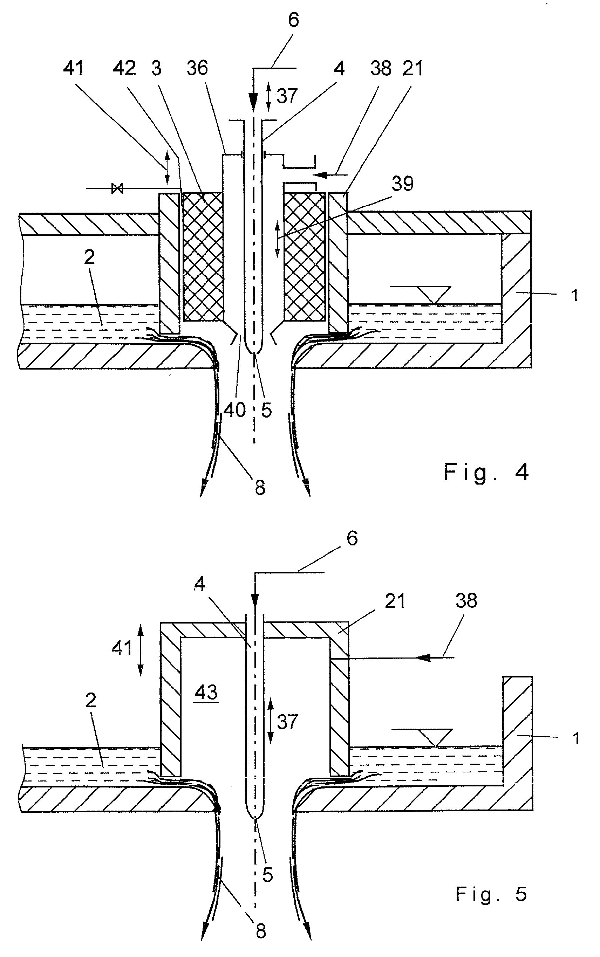

In dieser zeigen Fig.1 eine erste Ausbildung einer zur Durchführung des erfindungsgemäßen Verfahrens geeigneten Einrichtung in schematischer Darstellung, teilweise im Schnitt, Fig.2 eine abgewandelte Ausbildung der Einrichtung nach Fig.1 mit einem rotierenden Leitkörper und einer anschließenden Gegenstromstrahlmühle, Fig.3 eine Ausbildung der erfindungsgemäßen Vorrichtung und Fig.4 und Fig.5 weitere abgewandelte Ausbildungen des Zerstäuberkopfes.

In Fig.1 ist mit 1 ein Schlackentundish bezeichnet, in welchem schmelzflüssige oxidische Schlacke 2 aufgenommen ist. In diese schmelzflüssige Schlacke 2 taucht unter Zwischenschaltung einer wärmeisolierenden Auskleidung 3 eine 4, deren Düsenmündung mit 5 bezeichnet ist. Der Druckwasserlanze 4 wird heißes Druckwasser mit einem Druck von etwa 42 bar und einer Temperatur von etwa 240°C über die Leitung 6 zugeführt, wobei die entsprechende Speisewasserpumpe schematisch mit 7 angedeutet ist.

Aus dem Tundish 1 strömt flüssige Schlacke 2 in Form eines Mantels 8 aus, innerhalb dessen axial das heiße Druckwasser über die Düse 5 ausgestoßen wird. Um die Wandstärke des Mantels 8 entsprechend einstellen zu können, sind der Schlackentundish 1 und/oder die Druckwasserlanze 4 im Sinne des Doppelpfeils 9 höhenverstellbar. Die Schlackenschmelze liegt mit Temperaturen von 1450 bis 1650°C vor.

Unmittelbar am Ausstoßpunkt der Düse 5 befindet sich auch der Verdampfungspunkt für das heiße Druckwasser, und es bildet sich eine schematisch durch die strichlierten Linien 10 angedeutete Kugelwelle aus, über welche das heiße Druckwasser explosionsartig expandiert. Diese Kugelwelle trifft mit mehrfacher Schallgeschwindigkeit auf die Innenfläche des Mantels 8 auf und führt zu einer Zerstäubung des Schlackenstrahles bei gleichzeitiger rascher Abkühlung durch die rasche Temperaturerniedrigung bei der explosionsartigen Expansion des heißen Druckwassers. Die zerstäubten Partikel gelangen radial auswärts in einen Ringkanal 12 und können aus diesem in einen Sichter 13 abgezogen werden.

Um eine gerichtete Strömung der zerstäubten Partikel zu gewährleisten, ist ein stehender Leitapparat 14 angeordnet, welcher für die Umlenkung und Auslenkung des Partikelstromes bzw. 2-Phasen-Gemisches von Vorteil ist. Das 2-Phasen-Gemisch, welches über die Leitung 15 in den Sichter 13 abgezogen wird, wird im Sichter getrennt, wobei die Feststoffe als feinste Partikel über die Zellradschleuse 16 ausgetragen werden. Der gasförmige Anteil, welcher in erster Linie aus Dampf besteht, kann über die Leitung 17 und ein Filter 18 in einen Kondensator 19 abgezogen werden, aus welchem über die Leitung 20 Schwefelwasserstoff und andere nicht kondensierende Gase abgezogen werden können. Das Kondensat kann gegebenenfalls nach einer nicht dargestellten weiteren Aufwärmung der Pumpe 7 rückgeführt werden, um als heißes Druckwasser wiederum in die Druckwasserlanze 4 rückgeführt zu werden.

Insgesamt kann eine derartige Vorrichtung mit Druckwassermengen von 0,1 bis 0,5 t je t Schlacke eingesetzt werden, wobei auf Grund der hohen Druckwassertemperaturen ein Zuwachsen der Tundishauslauföffnung bei entsprechender Isolation 3 mit Sicherheit vermieden werden kann. Der Kühlraum und insbesondere die Ringkammer 12 kann mit Gegenstrom-Heißwasserwärmetauschern zur Nutzung der restlichen Enthalpie über Strahlungs- und Konvektionsvorgänge ausgestattet sein, um auf diese Weise das kondensierte Heißwasser wiederum auf die gewünschte hohe Temperatur zu bringen bevor der Heißwasserstrom mit der Pumpe 7 wiederum auf den gewünschten Druck gebracht wird.

In Fig. 2 wurden die Bezugszeichen für Bauteile, welche auch in der Ausbildung nach Fig. 1 zum Einsatz gelangen, unverändert beibehalten. Zusätzlich ist die Isolation der Druckwasserlanze 4 nicht nur mit einer wärmeisolierenden Auskleidung 3 getroffen, sondern es ist das Wehrrohr gesondert als Bauteil aus hochverschleißfähigem Material und beispielsweise aus Siliziumkarbid ausgebildet und mit 21 bezeichnet.

Der Leitapparat 14, wie er bei der Ausbildung nach Fig. 1 vorgesehen war, ist hier als Rotor 22 ausgebildet und an seinem Umfang mit Düsen oder Schlitzen 23 versehen. Der Rotor 22 des rotierenden Leitapparates ist über Labyrinthdichtungen 24 gegenüber dem Tundish 1 abgedichtet, wobei sich hier auf Grund des sich bildenden Dampfes eine Labyrinthdichtung mit Sperrdampf ergibt. Ebenso erfolgt die Labyrinthdichtung gegenüber dem Ringkanal 12, wobei diese Labyrinthdichtung mit 25 bezeichnet ist. Schließlich ist eine Labyrinthdichtung 26 zwischen Rotor 22 und einem Stator 27 vorgesehen, wobei auch im Stator in entgegengesetzter Richtung zur Mündung der Düsen 23 des Rotors Düsen 28 vorgesehen sind. Über einen Ringkanal 29 im Stator wird Treibgas, gegebenenfalls mit dem über eine Zellradschleuse 30 eingetragenen Grobgut eines Sichters, ausgestoßen, wobei sich in dem Kanal 31 ein Mahlraum ausbildet, in welchem die über die Düsen 28 des Stators und die Düsen 23 des Rotors 22 in zueinander entgegensetzter Richtung ausgetragenen Teilchen weiter zerkleinert werden. Die Treibgaszufuhr erfolgt über eine Leitung 32. Die Rotationsbewegung des rotierenden Leitkörpers bzw. Rotors 22 ist schematisch durch den Pfeil 33 angedeutet.

Insgesamt wird durch die Rotation des rotierenden Leitkörpers bzw. Rotors 22 ein Saugdruck erzeugt, welcher die Gefahr einer Ausbildung eines Überdruckes in Richtung zum Tundish 1 und damit eine Rückschlaggefahr verhindert.

Der Rotor 22 kann direkt oder indirekt gekühlt sein und gewünschtenfalls zur Druckwassererhitzung herangezogen werden.

In Fig.3 ist nun eine abgewandelte Ausbildung des Zerstäuberkopfes gemäß der Erfindung dargestellt. Es wurden die Bezugszeichen für Bauteile, welche auch in den Ausbildungen nach den Fig.1 und 2 zum Einsatz gelangen, unverändert beibehalten. Die aus dem Tundish 1 in Form eines hohlzylindrischen Strahles 8 ausströmende Schlacke 2 gelangt in einen Kühlraum 33. Im Unterschied zu den oben beschriebenen Ausbildungen ist nun die Druckwasserlanze 4 derart angeordnet, dass die Düsenmündung 5 zur Auslauföffnung 34 des Schlackentundish 1 gerichtet angeordnet ist. Die Heißwasserlanze 4 muss bei dieser Anordnung nicht in die Schlacke 2 eintauchen und es kann daher auf eine entsprechende wärmeisolierende Auskleidung bzw. auf ein gesondertes Wehrrohr aus hochverschleißfestem Material verzichtet werden. Das Druckwasser wird bei dieser Ausbildung entgegen der Schlackenausflussrichtung ausgestoßen und es bildet sich wiederum eine schematisch durch die strichlierten Linien 10 angedeutete Kugelwelle aus, deren Zentrum im Verdampfungspunkt liegt. Zur Einstellung der Wandstärke des Schlackenmantels 8 ist ein in Höhenrichtung verstellbarer Stempel 35 vorgesehen.

In Fig.4 ist nur eine abgewandelte Ausbildung des Zerstäuberkopfes dargestellt bei welcher die Druckwasserdüse 4 umgebend zusätzlich eine Dampflanze 36 angeordnet ist. Die Druckwasserdüse 4 ist hierbei gemäß dem Doppelpfeil 37 in Höhenrichtung verstellbar angeordnet. Auch die Dampflanze 36, welcher Dampf mit einem Druck von beispielsweise zwischen 2 und 5 bar über die Leitung 38 zugeführt wird, ist gemäß dem Pfeil 39 in Höhenrichtung verstellbar angeordnet. Dadurch kann die Düsengeometrie der im Auslaufbereich der Druckwasserdüse 4 und der Dampflanze 36 ausgebildeten Düse 40 den jeweiligen Bedürfnissen angepasst werden. Die Dampflanze 36 ist von einer wärmeisolierenden Auskleidung 3 umgeben, wobei wiederum ein gemäß dem Pfeil 41 höhenverstellbares Wehrrohr 21 der Regelung der ausfließenden Schmelzenmenge dient. Zwischen dem Wehrrohr 21 und der wärmeisolierenden Auskleidung 3 kann zusätzlich ein Spalt 42 frei bleiben, über welchen Heißgas gedrosselt eingebracht werden kann. Auch die Druckwasserlanze 4 kann von einer wärmeisolierenden Auskleidung umgeben sein, wenn die Temperatur des Druckwassers von der Temperatur des Dampfes verschieden ist.

In Fig.5 ist eine weitere abgewandelte Ausbildung des Zerstäuberkopfes dargestellt, bei welcher im Unterschied zur Ausbildung gemäß Fig.4 die Dampflanze 36 nicht als gesonderter Bauteil ausgebildet ist, sondern bei welcher Dampf unmittelbar in den vom Wehrrohr 21 begrenzten Ringraum 43 eingebracht wird.

## Patentansprüche

1. Verfahren zum Zerstäuben von schmelzflüssigem Material, wie z.B. flüssigen Schlacken, Glasschmelzen und/oder Metallschmelzen, bei welchem die flüssige Schlacke als hohlzylindrischer Strahl in einen Kühlraum ausgetragen wird, **dadurch gekennzeichnet, dass** in Richtung der Achse des hohlzylindrischen Schlackenstrahles heißes Druckwasser ausgestoßen wird, wobei der Verdampfungspunkt des Druckwasserstrahles nahe der oder unterhalb der Unterkante der Auslauföffnung des Schlackentundish liegt.

2. Verfahren nach Anspruch 1, **dadurch gekennzeichnet, dass** heißes Druckwasser mit einer Temperatur von 5-10°C unter dem Siedepunkt eingesetzt wird.

3. Verfahren nach Anspruch 1 oder 2, **dadurch gekennzeichnet, dass** heißes Druckwasser im Druckbereich von 10 bis 224 bar bei Temperaturen zwischen 175°C und 370°C eingesetzt wird.

4. Verfahren nach Anspruch 1,2 oder 3, **dadurch gekennzeichnet, dass** heißes Druckwasser mit einem Druck von etwa 42 bar und einer Temperatur von etwa 240°C eingesetzt wird.

5. Verfahren nach einem der Ansprüche 1 bis 4, **dadurch gekennzeichnet**, das heißes Druckwasser in Mengen von 0,1 bis 0,5 t je t Schlacke eingesetzt wird.

6. Verfahren nach einem der Ansprüche 1 bis 5, **dadurch gekennzeichnet, dass** das Druckwasser entgegen der Ausflussrichtung des Schlackenstrahles ausgestoßen wird.

7. Verfahren nach einem der Ansprüche 1 bis 6, **dadurch gekennzeichnet, dass** das heiße Druckwasser mit hochfrequenten Schwingungen, insbesondere Ultraschallschwingungen, beaufschlagt wird.

8. Verfahren nach einem der Ansprüche von 1 bis 7, **dadurch gekennzeichnet, dass** den Druckwasserstrahl umgebend Dampf ausgestoßen wird.

9. Verfahren nach Anspruch 8, **dadurch gekennzeichnet, dass** der Dampf als Sattdampf oder überhitzter Dampf eingesetzt wird.

10. Vorrichtung zur Durchführung des Verfahrens nach einem der Ansprüche 1 bis 9 mit einem Schlackentundish (1), an dessen Auslauföffnung (34) ein Kühlraum (33) anschließt, **dadurch gekennzeichnet, dass** fluchtend mit der Achse der Auslauföffnung (34) eine Druckwasserdüse (4) angeordnet ist, deren Düsenmündung (5) zur Auslauföffnung (34) des Schlackentundish (1) gerichtet angeordnet ist, wobei an die Druckwasserdüse (4) eine Speisewasserpumpe (7), insbesondere Kolbenpumpe, angeschlossen ist.

11. Vorrichtung nach Anspruch 10, **dadurch gekennzeichnet, dass** der Abstand der Düsenmündung (5) der Druckwasserdüse (4) von der Unterkante des Tundishauslaufes (34) dem 0,5 bis 5-fachen der lichten Weite des hohlzylindrischen Schlackenstrahles (8) entspricht.

12. Vorrichtung nach Anspruch 10 oder 11, **dadurch gekennzeichnet, dass** an die Speisewasserpumpe (7) ein Schwingquarz angeschlossen ist.

13. Vorrichtung nach einem der Ansprüche 10 bis 12, **dadurch gekennzeichnet, dass** die Druckwasserdüse (4) in Höhenrichtung (9) verstellbar angeordnet ist.

14. Vorrichtung nach einem der Ansprüche 10 bis 13, **dadurch gekennzeichnet, dass** die Druckwasserdüse (4) umgebend eine Dampflanze (36) mit ringförmigem Austrittsquerschnitt angeordnet ist.

15. Vorrichtung nach Anspruch 14, **dadurch gekennzeichnet, dass** die Dampflanze als Wehrrohr (21) in die Schmelze (2) eintauchend ausgebildet ist.

16. Vorrichtung nach Anspruch 14 oder 15, **dadurch gekennzeichnet, dass** die Dampflanze (36) in Höhenrichtung (39) verstellbar angeordnet ist.

17. Vorrichtung nach einem der Ansprüche 14 bis 16, **dadurch gekennzeichnet, dass** der Mündungsbereich (40) der Dampflanze (36) mit der Druckwasserdüse (4) eine Lavaldüse, vorzugsweise eine unterexpandierte Lavaldüse, ausbildet.

18. Vorrichtung nach einem der Ansprüche 10 bis 17, **dadurch gekennzeichnet, dass** an den Schlackenauslauf (34) in axialer Richtung anschließend im Kühlraum ein Leitapparat (14) angeordnet ist.

19. Vorrichtung nach Anspruch 18, **dadurch gekennzeichnet, dass** der Leitapparat als Rotor (22) ausgebildet ist und an seinem Umfang in einen als Strahlmühle ausgebildeten Kanal (31) mündet.

20. Vorrichtung nach Anspruch 19, **dadurch gekennzeichnet, dass** der Rotor (22) über Sperrdampf-Labyrinthdichtungen (24, 25, 26) an der in einem stationären Teil (27) ausgebildeten Strahlmühle und am Tundish (1) anschließt.
